# EUROPÄISCHE PATENTANMELDUNG

(11) **EP 0 564 399 A2**
(43) Veröffentlichungstag der Anmeldung: **06.10.1993**
(21) Anmeldenummer: 93810185.4
(22) Anmeldetag: 15.03.1993
(51) Int. Cl.: A47J 31/40

(54) **Vorrichtung zur Zubereitung von Heissgetränken**

(30) Priorität: 19.03.1992 DE 4208855
(71) Anmelder: COSMEC S.r.l., I-24059 Urgnano, Bergamo (IT)
(72) Erfinder: Frei, Hans-Peter, CH-8616 Oetwil am See (CH)
(74) Vertreter: Rottmann, Maximilian R.

(57) **Zusammenfassung**

Eine Vorrichtung zum Aufbrühen von Kaffee weist eine Brühkammer (1), einen beweglichen Kolben (10) zum Verdichten von Getränkepulver (11) sowie ein Verschlussorgan (4) zum Verschliessen der Brühkammer (1) auf. Zum Verdichten des Getränkepulvers (11) wird der bewegliche Kolben (10) hydraulisch angetrieben. Dazu wird das zum Aufbrühen von Getränkepulver (11) notwendige Brühwasser (14) als Druckmittel verwendet. Der bewegliche Kolben (10) weist einen Längskanal (26) auf, welcher von einem Überdruckventil (27) verschlossen ist. Erreicht nun der durch das Brühwasser (14) auf den beweglichen Kolben (10) sowie einen Verschlussteil (29) des Überdruckventils (27) wirkende Druck einen bestimmten Wert, so öffnet der Verschlussteil (29) und gibt damit den Längskanal (26) frei. Dadurch kann das Brühwasser (14) durch den Kolben (10) in einen Brühraum (12) strömen und darin das verdichtete Getränkepulver (11) aufbrühen. Nach dem Aufbrühen wird das ausgelaugte Kaffeepulver auf herkömmliche Weise entfernt. Anschliessend wird der Kolben (10) mechanisch gegen den Boden (3) der Brühkammer (1) gezogen und dadurch das auf der Rückseite des Kolbens (10) in der Brühkammer (1) verbliebene Restwasser verdrängt. Diese Art der Kolbenbetätigung ermöglicht einen konstanten Verdichtungsgrad des zudosierten Getränkepulvers, unabhängig von der Pulvermenge.

## Beschreibung

Die vorliegende Erfindung bezieht sich auf eine Vorrichtung zur Zubereitung von Heissgetränken, insbesondere von Kaffee, nach dem Oberbegriff des Patentanspruchs 1.

Gattungsgemässe Vorrichtungen kommen vor allem im Bereich der sogenannten vollautomatischen Kaffee-Espresso-Maschinen (Vollautomaten) zum Einsatz. Diese Vollautomaten werden überwiegend in Haushaltungen eingesetzt. Es sind natürlich auch Anwendungen in Gaststätten sowie in Kantinen und dergleichen bekannt.

Ein durch eine solche Vorrichtung zubereitetes Kaffee-Getränk soll vor allem drei Qualitätsmerkmale erfüllen:
1. Das zubereitete Kaffee-Getränk soll an der Oberfläche einen Schaumüberzug aufweisen.
2. Es soll einen aromatischen Geschmack aufweisen.
3. Es soll nach der Zubereitung "heiss" sein.

Die Zubereitung eines Kaffee-Getränks mittels eines solchen Vollautomaten kann in etwa folgendermassen ablaufen: Einer auf einer Seite geöffneten Brühkammer wird gemahlenes Kaffeepulver zudosiert. Danach wird die offene Seite der Brühkammer verschlossen. Anschliessend wird das in der Brühkammer befindliche Kaffeepulver durch einen beweglichen Kolben verdichtet. Dieses verdichtete Kaffeepulver wird dann durch heisses, unter Druck stehendes Wasser aufgebrüht. Nach dem Aufbrühvorgang fliesst das frische Kaffee-Getränk schliesslich in eine entsprechend positionierte Tasse ein.

Damit ein derartig zubereitetes Kaffee-Getränk die drei vorgängig erwähnten Qualitätsmerkmale erfüllt, ist es äusserst wichtig, dass das Kaffeepulver beim Aufbrühvorgang eine bestimmte Verdichtung aufweist, denn nur dadurch wird gewährleistet, dass das Brühwasser das Kaffeepulver mit der richtigen Geschwindigkeit durchströmt, und somit bezüglich der Temperatur (Durchlauferhitzer), dem Geschmack sowie dem Aussehen (Schäumli) den Erwartungen des Kunden entspricht.

Um das aufzubrühende Kaffeepulver zu Verdichten, kommt bei gattungsgemässen Vollautomaten, wie sie im Haushalt eingesetzt werden, im allgemeinen eine Vorrichtung zum Einsatz, bei welcher der das Kaffeepulver verdichtende Kolben einen vorbestimmten, nicht veränderbaren Weg zurücklegt. Solange dabei die Kaffeepulvermenge konstant bleibt, kann mit diesen Vorrichtung auch ein akzeptables Ergebnis in Bezug auf die Getränkequalität erreicht werden.

Um die gestiegenen Erwartungen der Konsumenten an eine moderne Kaffeemaschine zu erfüllen, soll bei einer neuen Generation von Kaffeemaschinen die Möglichkeit bestehen, zwischen verschiedenen Kaffee-Getränken wählen zu können. Beispielsweise ist es denkbar, dass zwischen einem Espresso, einem Kaffee-Crème und einem Milchkaffe, jeweils in verschiedener Stärke, ausgewählt werden kann. Um dies zu ermöglichen, muss jedoch die für den Aufbrühvorgang eingesetzte Menge an Kaffeepulver für die verschiedenen Kaffee-Getränke jeweils verändert werden können. Damit aber bei unterschiedlicher Pulvermenge ein gutes Ergebnis in Bezug auf die Getränkequalität erzielt wird, muss das aufzubrühende Kaffeepulver, unabhängig von der Pulvermenge, auf einen bestimmten Wert verdichtet werden. Dies wiederum bedeutet, dass der Kolben, in Abhängigkeit der Pulvermenge, einen unterschiedlichen Weg zurücklegen muss.

Aus der DE PS 36 15 158 ist eine Vorrichtung bekannt, welche einen Schrittmotor zum Antrieb des beweglichen Kolbens aufweist. Über diesen Schrittmotor kann der Kolbenhub verändert werden. Gemäss einer anderen Ausführungsform kann diese Vorrichtung eine Kraftmessdose aufweisen, durch die die Anpresskraft des Kolbens auf das Kaffeepulver gemessen wird. Durch die Messung der Anpresskraft kann dann der Antriebsmotor für den Kolben entsprechend gesteuert werden.

Aus der DE 33 16 157 ist eine Brüheinrichtung für eine selbsttätig arbeitende Kaffeemaschine bekannt, bei welcher die Stromaufnahme des Kolbenantrieb-Motors gemessen und der Motor dadurch entsprechend gesteuert wird.

Diese Systeme haben jedoch den grossen Nachteil, dass sie nur mit einem entsprechend grossen Aufwand realisierbar sind. Dies hat zur Folge, dass der Preis für eine entsprechnde Vorrrichtung hoch ist, und damit ein wirtschaftlicher Einsatz, insbesondere bei Verwendung in Vollautomaten für den Haushaltbereich, kaum in Frage kommt. Ausserdem hat sich gezeigt, dass solche Systeme bezüglich der Wartung relativ hohe Anforderungen stellen.

Aus der AT-PS 338 989 ist ausserdem ein hydraulisch angetriebenes Kolben-Zylinder-Aggregat zum Verdichten des im Brühraum befindlichen Kaffeepulvers bekannt. Die darin vorgeschlagene Lösung sieht ein auf einem hydraulisch betätigten Kolben über eine Feder abgestütztes Verteilsieb vor. Durch die Kraft, die beim Verdichten des Kaffeepulvers über das Verteilsieb auf die Feder wirkt, wird diese entsprechend zusammengedrückt. Durch die Relativbewegung des Verteilsiebs gegenüber dem Kolben wird ein am Verteilsieb in Wirkverbindung stehender Arm gegen einen am Kolben angebrachten Schalter bewegt, sodass dieser Arm den Schalter bei entsprechender Relativbewegung betätigt und damit die Hubbewegung des Kolbens gestoppt wird. Zum Bewegen des Kolbens ist bei diesem System ein separater Hydraulikkreis vorgesehen. Dass eine solche Ausführung eine ausserordentlich aufwendige Lösung darstellt, versteht sich von selbst.

Es ist daher die Aufgabe der Erfindung eine gattungsgemässe Vorrichtung der eingangs genannten Art so weiter zu entwickeln, dass das im Brühraum befindliche, aufzubrühende Kaffeepulver unabhängig von der Pulvermenge auf einen bestimmten Wert verdichtet wird, und dass die Vorrichtung ausserdem mit geringem Aufwand und entsprechend kostengünstig hergestellt werden kann.

Diese Aufgabe wird durch die im kennzeichnenden Teil des Patentanspruchs 1 beschriebenen Merkmale gelöst. Bevorzugte Ausführungsformen und Weiterbildungen sind in den abhängigen Ansprüchen 2 bis 8 umschrieben.

Durch eine hydraulische Betätigung des Kolbens zum Verdichten des Kaffeepulvers wird erreicht, dass der Kolben einen praktisch beliebig variierbaren Weg innerhalb der Brühkammer zurücklegt. Eine bevorzugte Ausführungsform sieht vor, dass im Kolben ein Kolbenventil angeordnet ist. Dadurch kann sichergestellt werden, dass der Verdichtungsgrad des Kaffeepulvers unabhängig von der Pulvermenge gut reproduzierbar ist. Dadurch, dass zum Betätigen des Kolbens unter Druck stehendes Brühwasser verwendet wird, welches sowieso in gattungsgemässen Kaffeemaschinen vorhanden ist, kann eine solche Vorrichtung einer Kaffeemaschine ohne grossen Mehraufwand ausgeführt und daher preisgünstig realisiert werden.

Vorzugsweise wird beim mechanischen Zurückfahren des Kolbens das Restwasser aus dem auf der Kolbenrückseite befindlichen Teil der Brühkammer verdrängt. Dies ist vorteilhaft, damit kein abgestandenes Wasser für den nachfolgenden Getränke-Aufbereitungszyklus verwendet wird. Denn durch dieses Restwasser würden die hygienischen Anforderungen, die an ein frisch zubereitetes Getränk gestellt werden, nicht erfüllt und zudem würde der Geschmack des aufgebrühten Getränks beeinträchtigt.

Ein weiterer Nachteil dieses Restwassers besteht darin, dass sich dieses hinter dem in solchen Kaffeemaschinen vorhandenen Heisswasserbereiter sammelt. Beim nächsten Getränkeaufbereitungs-Zyklus vermischt sich dieses abgekühlte Restwasser dann mit dem frischen Brühwasser und reduziert dadurch die Temperatur des frisch zubereiteten Kaffeegetränks erheblich.

Durch die in einer bevorzugten Ausführungsform vorgesehene spezifische Anordnung des Kolbenventils zwischen dem Kolben und dem Verteilsieb kann vermieden werden, dass das Ventil verstopft, da das Verteilsieb das Kaffeepulver vom Kolbenventil fernhält. Ausserdem wird dadurch bei jedem Aufbrühvorgang das Ventil mit frischem Brühwasser durchspühlt und somit gereinigt.

Im folgenden wird ein Ausführungsbeispiel anhand eines Querschnittes durch die erfindungsgemässe Vorrichtung näher erläutert. Zur besseren Verständlichkeit wurde der Getränke-Aufbereitungszyklus in verschiedene Phasen aufgeteilt. Im einzelnen zeigen:
- Fig.1: einen Querschnitt durch die Vorrichtung nach der Getränkepulver-Zudosierung;
- Fig.2: einen Querschnitt durch die Vorrichtung nach dem Verschliessen der Brühkammer;
- Fig.3: einen Querschnitt durch die Vorrichtung nach dem Verdichten des Getränkepulvers;
- Fig.4: einen Querschnitt durch die Vorrichtung beim Aufbrühen des Getränkepulvers;
- Fig.5: einen Querschnitt durch die Vorrichtung nach dem Ausstossen des Getränkepulvers; und
- Fig.6: einen Querschnitt durch die Vorrichtung beim Zurückfahren des Kolbens in die Ausgangsstellung.

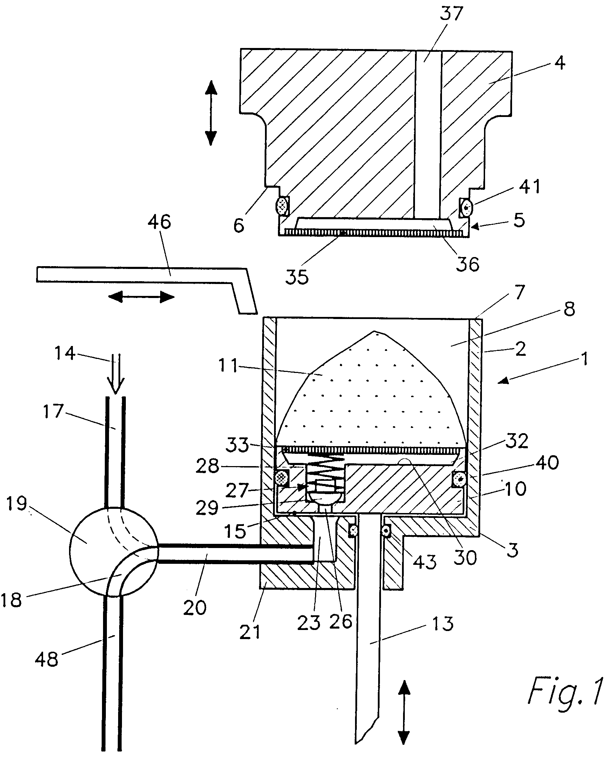

In den Fig. 1 bis 6 ist als Ausführungsbeispiel der Erfindung eine Vorrichtung zur Zubereitung von Kaffee ersichtlich. Zur anschaulichen Darstellung wurde der Getränkezubereitungszyklus dazu in sechs verschiedene, einzelne Phasen aufgeteilt.

Solche Kaffeemaschinen weisen im allgemeinen ein Gehäuse, einen Frischwasserbehälter, eine Pumpe zur Förderung des Frischwassers, einen Heisswasserbereiter zum Erhitzen des Frischwassers für den Aufbrühvorgang sowie Mittel zum Einleiten des frisch aufgebrühten Kaffeegetränks in ein entsprechendes Getränkegefäss auf. Diese Bestandteile wurden der besseren Übersicht wegen in den Zeichnungen weggelassen, zumal dieses Bestandteile jedem Fachmann ausreichend bekannt sind und mit der erfindungsgemässen Vorrichtung nicht in direktem Zusammenhang stehen.

Als wesentlichste Bestandteile weist die erfindungsgemässe Vorrichtung eine zylindrische Brühkammer 1, einen darin angeordneten, beweglichen Kolben 10 sowie ein Verschlussorgan 4 auf.

Die in ihrer Grundform becherförmig gestaltete Brühkammer 1 weist eine runde Wandung 2 sowie zum Abschluss gegen unten einen Boden 3 auf. Durch den Boden 3 sowie die Wandung 2 wird der Brühkammerraum 8 gebildet. Zum Verschliessen der dem Boden 3 gegenüberliegenden, offenen Seite der Brühkammer 1 dient ein im wesentlichen zylinderförmiges Verschlussorgan 4. Dieses Verschlussorgan 4 weist einen in die Brühkammer 1 eintauchbaren Kolbenansatz 5 sowie einen ringförmigen Bund 6 zum Anschlag am oberen Brühkammerrand 7 auf. Der Aussendurchmesser des Kolbenansatzes 5 korrespondiert dabei mit dem Innendurchmesser des Brühkammerraums 8. Um den beim Eintauchen des Kolbenansatzes 5 zwischen der Brühkammer 1 und dem Kolbenansatz 5 verbleibenden Spalt abzudichten, wird der Kolbenansatz 5 von einem Dichtring 41 umschlossen. An dem der Brühkammer 1 zugewandten Ende im Bereich des Kolbenansatzes 5 weist das Verschlussorgan 4 ein Getränkesieb 35 auf. Auf der Rückseite dieses Getränkesiebs 35 ist eine scheibenförmige Sammelkammer 36 in das Verschlussorgan 4 eingelassen. Von dieser Sammelkammer 36 führt eine Auslassöffnung 37 in Form einer Bohrung quer durch das Verschlussorgan 4. Der Einfachheit halber wurde die an sich bekannte Befestigung und Führung sowie der Antrieb des Verschlussorgans nicht mit allen Einzelheiten in der Zeichnung dargestellt.

Im Brühkammerraum 8 ist der bewegliche Kolben 10 angeordnet, welcher zusammen mit dem in die Brühkammer 1 eingetauchten Verschlussorgan 4 den das Getränkepulver 11 aufnehmenden Brühraum 12 begrenzt. Um den zwischen dem beweglichen Kolben 10 und der Wandung 2 der Brühkammer 1 bestehenden Spalt abzudichten, weist der Kolben 10 einen ihn an seinem Umfang umfassenden Dichtring 40 auf.

Am unteren, dem Brühraum 12 abgewandten Ende des beweglichen Kolbens 10 weist dieser eine längliche Kolbenstange 13 auf, welche durch einen vom Boden 3 der Brühkammer 1 nach unten abstehenden, halbkreisförmigen Fortsatz 21 hindurch nach aussen geführt ist. Die Kolbenstange 13 kann an eine hier nicht dargestellte, mechanische Antriebseinheit zu- und abgekoppelt werden. Zum Abdichten der für die Durchführung der Kolbenstange 13 durch den Fortsatz 21 notwendigen Bohrung ist im Fortsatz 21 ein Dichtring 43 vorgesehen.

Um eine Zuleitung 17 für Brühwasser 14 mit einer radial in den Fortsatz 21 der Brühkammer 1 führenden Leitung 20 zu verbinden, ist ein Zweiwegventil 19 vorhanden. Dieses Zweiwegventil 19 weist einen umschaltbaren Drehschieber 18 auf, durch welchen einerseits die Zuleitung 17 mit der Leitung 20 und andererseits die Leitung 20 mit einer Ableitung 48 verbunden werden kann. Im Fortsatz 21 mündet die Leitung 20 in eine vertikal angeordnete Kammer 23, welche ihrerseits auf der Rückseite 15 des beweglichen Kolbens 10 in den Brühkammerraum 8 mündet.

Damit das durch die Zuleitung 17, die Leitung 20 und die Kammer 23 auf die Rückseite 15 des beweglichen Kolbens 10 geleitete Brühwasser 14 durch diesen Kolben 10 in den eigentlichen Brühraum 12 gelangen kann, weist der Kolben 10 einen von seiner Rückseite 15 auf die Oberseite 30 führenden und mit zwei unterschiedlichen Durchmessern versehenen Längskanal 26 auf.

Auf der Kolbenoberseite 30 mündet dieser Längskanal 26 in einen in den Kolben 10 eingelassenen, ringförmigen Verteilraum 32, welcher gegen den Brühraum 12 von einem Verteilsieb 33 abgetrennt ist. Um den Längskanal 26 verschliessen zu können, weist der bewegliche Kolben 10 zudem ein Kolbenventil 27 auf. Das Kolbenventil 27 umfasst eine Feder 28 sowie einem pilzförmigen Verschlussteil 29. Der Verschlussteil 29 wird über die am Verteilsieb 33 abgestützte Feder 28 vorgespannt und Verschliesst dadurch mit seinem pilzkopfförmigen Ende den engeren, unteren Teil des Längskanals 26.

Um ausgelaugtes Kaffeepulver 11, welches nach dem Aufbrühvorgang in Form eines Kuchens 50 auf der Oberfläche des beweglichen Kolbens 10 zu liegen kommt, zu entfernen, ist oberhalb der Brühkammer 1 ein bewegliches, schieberförmiges Abstreiforgan 46 angeordnet, welches aus Gründen einer einfachen Darstellung ohne die Befestigung und den Antrieb eingezeichnet ist.

Aus der Fig. 1 ist die Vorrichtung in der Ausgangsstellung ersichtlich. Im Brühraum 12 ist bereits Getränkepulver 11 vorhanden, welches in bekannter, hier aber nicht näher dargestellten Weise vorgängig zudosiert wurde und innerhalb des Brühraums 12 in Form eines kleinen "Hügels" auf dem Verteilsieb 33 des beweglichen Kolbens 10 zu liegen kommt. Der bewegliche Kolben 10 befindet sich dabei in seiner unteren Ruheposition und liegt auf dem Boden 3 der Brühkammer 1 auf. Das Verschlussorgan 4 ist während dieser Phase der Getränkezubereitung vom Oberteil der Brühkammer 1 entfernt. Um ein Zuleiten von Brühwasser 14 während dieser Phase zu verhindern, ist der Drehschieber 18 des Zweiwegventils 19 auf "Ableiten" geschaltet, das heisst, dass zwischen der Zuleitung 17 und der in den Fortsatz 21 der Brühkammer 1 führenden Leitung 20 keine Verbindung besteht, sondern dass die Leitung 20 über den Drehschieber 18 mit der Ableitung 48 verbunden ist.

Das Abstreiforgan 46 steht in seiner Ruheposition und ist horizontal aus dem Bereich der Brühkammer 1 zurückgezogen. Das im beweglichen Kolben 10 angeordnete Kolbenventil 27 verschliesst den Längskanal 26 durch den mittels der Feder 28 vorgespannten Verschlussteil 29.

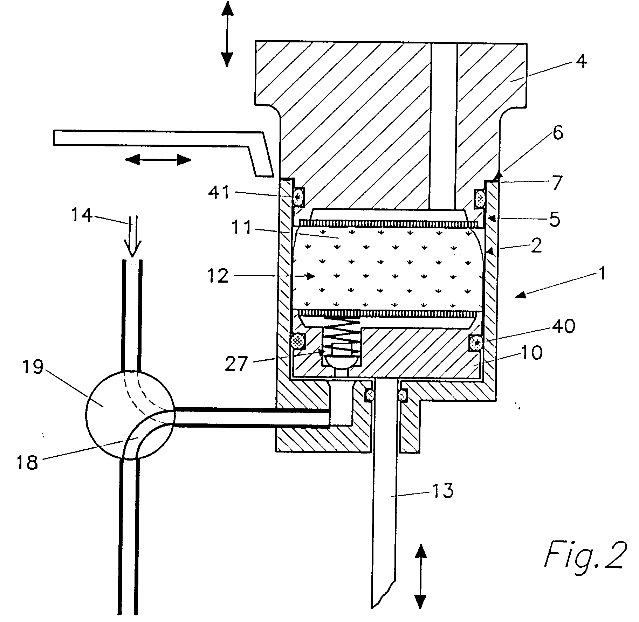

Aus der Fig.2 ist die Vorrichtung in einer zweiten Getränkezubereitungs-Phase, mit oben verschlossener Brühkammer 1, zu ersehen. Dazu wurde der Kolbenansatz 5 des Verschlussorgans 4 soweit in die Brühkammer 1 eingefahren, bis der als Bund 6 ausgebildete Anschlag des Verschlussorgans 4 am oberen Brühkammerrand 7 aufsteht. Damit der zwischen dem Kolbenansatzunterteil 5 und der zylindrischen Wandung 2 der Brühkammer 11 bestehende Spalt abgedichtet wird, weist das Verschlussorgan 4 einen Dichtring 41 auf, welcher beim Einfahren des Kolbenansatzes 5 in die Brühkammer 1 zusammengedrückt wird und daher dichtend an die Wandung 2 zu liegen kommt. Zum Abdichten des zwischen dem beweglichen Kolben 10 sowie der zylindrischen Wandung 2 der Brühkammer 1 bestehenden Spalts weist der Kolben 10 ebenfalls einen Dichtring 40 auf.

Durch das Einfahren des Verschlussorgans 4 in die Brühkammer 1 wird das Volumen des durch die Oberfläche des Kolbens 10 sowie die Unterseite des Verschlussorgans 4 gebildeten Brühraums 12 verkleinert, so dass dadurch (bei einer entsprechenden Menge) das im Brühraum 12 befindliche Getränkepulver 11 vorverdichtet wird. Der Drehschieber 18 des Zweiwegventils 19 steht in dieser Getränkezubereitungsphase, um ein frühzeitiges Zuleiten von Brühwasser 14 zu verhindern, noch immer auf "Ableiten". Der im beweglichen Kolben 10 angeordnete Längskanal 26 ist noch immer durch das Kolbenventil 27 verschlossen.

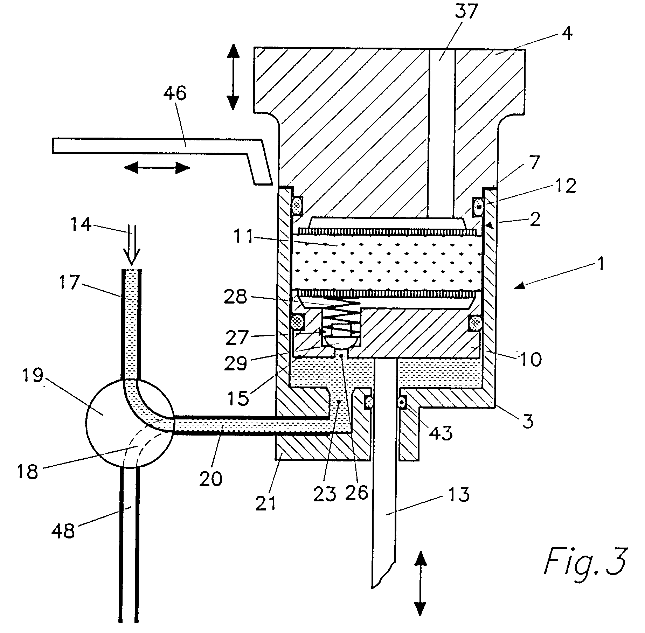

Um das Getränkepulver 11 vor dem Aufbrühen eines Heissgetränks zu Verdichten, wird nun der Drehschieber 18 des Zweiwegventils 19 umgeschaltet, so dass zwischen der Zuleitung 17 und der Leitung 20 eine Verbindung besteht. Dadurch kann das von einer nicht dargestellten, an sich bekannten Pumpe geförderte und damit unter Druck stehende Brühwasser 14, welches vor dem Eintritt in die Zuleitung 17 bereits einen nicht dargestellten und ebenfalls an sich bekannten Heisswasserbereiter passiert hat, über die Zuleitung 17 und die Leitung 20 in die Kammer 23 und von da auf die Rückseite 15 des beweglichen Kolbens 10 gelangen und diesen somit mit dem entsprechenden Druck beaufschlagen. Da der im beweglichen Kolben 10 vorhandene Längskanal 26 durch den federbelasteten Verschlussteil 29 verschlossen ist, wird der bewegliche Kolben 10 durch den auf seiner Rückseite 15 anliegenden Druck des Brühwassers 14 nach oben in Richtung des Verschlussorgans 4 bewegt. Durch diese Kolbenbewegung wird der Brühraum 12 verkleinert, so dass dadurch das Getränkepulver 11 entsprechend verdichtet wird. Diese Phase ist aus dem in der Fig. 3 dargestellten Zustand ersichtlich.

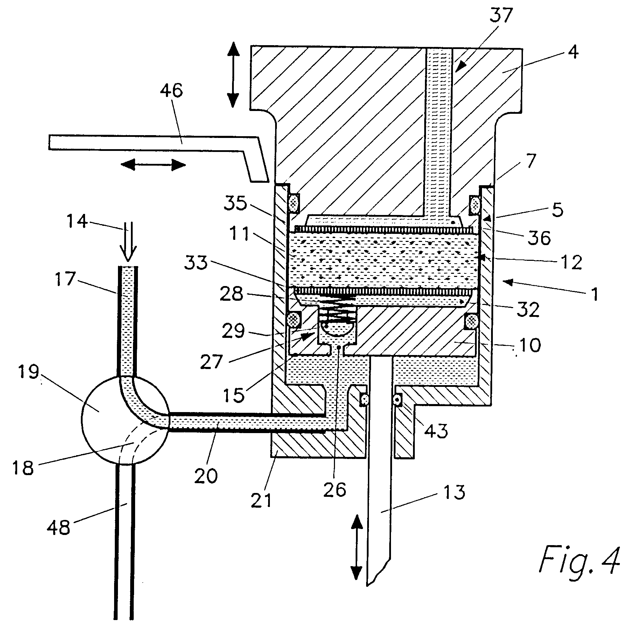

Da das Getränkepulver 11 nicht beliebig kompressibel ist, wird der durch das Brühwasser 14 auf den beweglichen Kolben 10 sowie auf den federbelasteten Verschlussteil 29 des Kolbenventils 27 wirkende Druck ansteigen. Dabei wird sich, bei Erreichen eines bestimmten Grenzdrucks, der ebenfalls mit diesem Druck beaufschlagte Verschlussteil 29 öffnen. Dadurch wird die im beweglichen Kolben 10 vorhandene Längsbohrung 26 geöffnet, so dass das noch immer unter Druck stehende Brühwasser 14 durch diese Längsbohrung 26 in den Verteilraum 32 des Kolbens 10 strömt. Vom Verteilraum 32 fliesst das Brühwasser 14 dann durch das Verteilsieb 33 in den Brühraum 12 hinein, wo dann das darin befindliche und verdichtete Getränkepulver 11 aufgebrüht wird. Durch das am Kolbenansatz 5 des Verschlussteils 4 angebrachte Getränkesieb 35 kann das frisch aufgebrühte Getränk in die Sammelkammer 36 strömen, um von da aus durch die Auslassöffnung 37 des Verschlussteils 4 und eine nicht dargestellte Leitung in das entsprechende, bereitzustellende Getränkegefäss einzufliessen. Dieser Zustand ist in Fig. 4 dargestellt. Nach Beendigung des Aufbrühvorgangs wird die Pumpe ausgeschaltet.

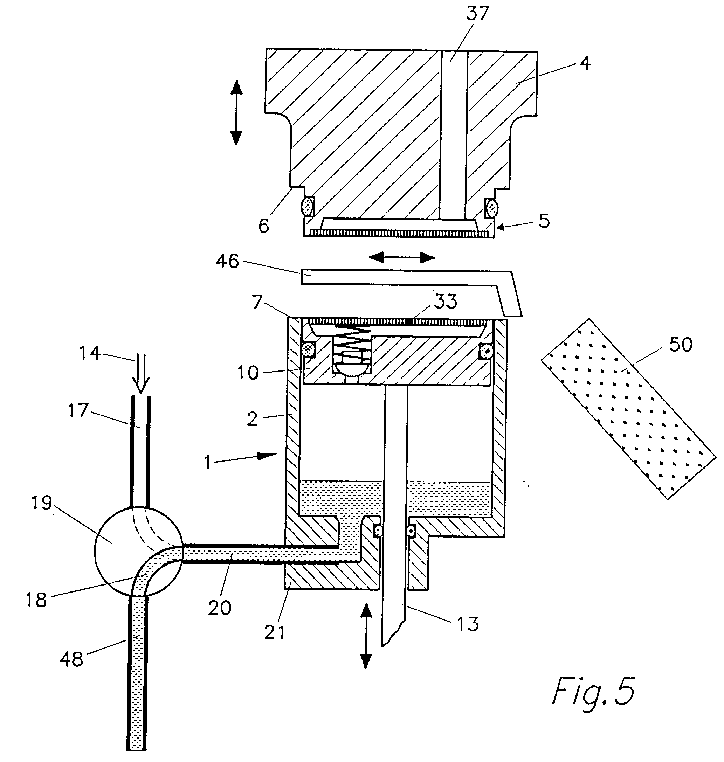

Den Zustand der Vorrichtung nach dem Ausstossen und Wegschieben des verbrauchten Kaffeepulvers 11 ist aus der Fig. 5 ersichtlich. Dazu wird als erstes der Kolbenansatz 5 des Verschlussorgans 4 aus der Brühkammer 1 ausgefahren. Anschliessend wird der bewegliche Kolben 10 an die mechanische Antriebsvorrichtung angekoppelt und, von dieser angetrieben, so weit nach oben gegen den Brühkammerrand 7 bewegt, bis die durch das Verteilsieb 33 des beweglichen Kolbens 10 gebildete Oberfläche mit dem oberen Brühkammerrand 7 eine ebene Fläche bildet. Danach wird das Abstreiforgan 46 horizontal über den oberen Brühkammerrand 7 sowie die auf gleicher Höhe liegende Oberfläche des Kolbens 10 bewegt, so dass dabei das in Form eines Kuchens auf dem Verteilsieb 33 des beweglichen Kolbens 10 liegende, ausgelaugte Getränkepulver 50 seitlich weggestossen wird und in eine nicht dargestellte Auffangschale fällt. Danach fährt das Abstreiforgan 46 wieder in seine ursprüngliche Ausgangslage zurück.

Da auf der Rückseite des beweglichen Kolbens 10 kein unter Druck stehendes Brühwasser mehr anliegt, ist die durch den beweglichen Kolben 10 führende Längsbohrung durch den mittels der Feder 28 vorgespannten Verschlussteil 29 wieder verschlossen. Um ein Ableiten des zwischen der Kolbenrückseite 15 und dem Brühkammerboden 3 verbleibenden Restwassers zu ermöglichen, wurde der Drehschieber 18 des Zweiwegventils 19 umgeschaltet, so dass dadurch zwischen der Leitung 20 und der Ableitung 48 eine Verbindung besteht und somit auf diesem Weg das Restwasser aus der Vorrichtung abfliessen kann. Durch dieses Umschalten des Zweiwegventils 19 wird ausserdem ein ungewolltes Zuführen von Brühwasser 14 während dieser Phase verhindert.

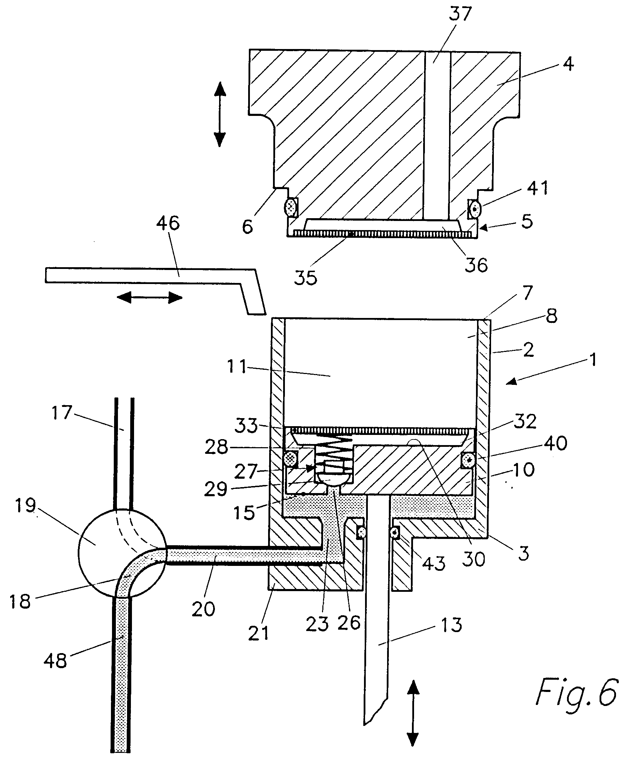

Eine Momentaufnahme beim Zurückfahren des Kolbens 10 in seine Ausgangsstellung sowie beim Verdrängen des Restwassers aus der Brühkammer 1 ist aus der Fig. 6 ersichtlich. Der bewegliche Kolben 10 wird dabei durch die mechanisch an der Kolbenstange 13 angekoppelte, nicht dargestellte Antriebsvorrichtung nach unten gegen den Boden 3 der Brühkammer 1 bewegt. Da kein Überdruck mehr auf das Kolbenventil 27 wirkt, dichtet dieses natürlich den im Kolben 10 vorhandenen Längskanal 26 ab. Beim Zurückfahren des Kolbens 10 wird das zwischen der Kolbenrückseite 15 und dem Boden 3 der Brühkammer 1 verbliebene Restwasser verdrängt, so dass dieses über die Leitung 20 und den auf "Ableiten" gestellten Drehschieber 18 durch die Ableitung 48 aus der Vorrichtung abfliesst. Um ein Ableiten des Restwassers zu Unterstützen, kann die Leitung 20 auch ein Gefälle gegen das Zweiwegventil 19 hin aufweisen. Das Ableiten von Restwasser ist aus Gründen der Hygiene sowie des Geschmacks und der Temperatur eines nachfolgend aufzubrühenden Kaffeegetränks besonders wichtig.

In diesem Ausführungsbeispiel ist zugunsten einer einfachen Darstellungsform die Brühkammer 1 immer in derselben Lage gezeichnet und nur das Verschlussorgan 4 beweglich dargestellt. In praktischen Ausführungsformen kommt jedoch sehr oft eine bewegliche, verschwenkbare Brühkammer 1 mit einem fest angeordneten Verschlussorgan 4 zum Einsatz.

Durch die sehr kompakte Bauweise einer solchen erfindungsgemässen Vorrichtung kann diese so konstruiert sein, dass die der Verschmutzung unterliegenden Teile in einer lösbaren Baugruppe Aufnahme finden. Eine Ausführungsform mit einer lösbaren Baugruppe wird ausserdem dadurch begünstigt, dass zum Antrieb des hydraulisch betätigten Kolbens keine stromführenden Kabel resp. Stecker vorhanden sein müssen und die lösbare Baugruppe dadurch leicht aus der Vorrichtung entfernt werden kann. Eine solche lösbare Baugruppe, die der einfachen Reinigung der verschmutzenden Teile dient, ist aus der EP OS 0 154 206 bekannt und braucht daher hier nicht näher erklärt zu werden.

## Patentansprüche

1. Vorrichtung zur Zubereitung von Heissgetränken, insbesondere von Kaffee, welche eine Brühkammer (1), Mittel zum Zuführen von erhitztem Wasser in die Brühkammer, einen in der Brühkammer angeordneten, beweglichen Kolben (10) zum Verdichten des durch das Brühwasser (14) aufzubrühenden Getränkepulvers (11) sowie ein Verschlussorgan (4) zum Verschliessen der Brühkammer (1) aufweist, dadurch gekennzeichnet, dass das der Brühkammer (1) unter Druck zugeführte Brühwasser (14) als Druckmedium zur Betätigen des beweglichen Kolbens (10) dient.

2. Vorrichtung nach Anspruch 1, dadurch gekennzeichnet, dass die Vorrichtung ein Überdruckventil (27) aufweist, welches den durch das Brühwasser (14) auf den hydraulisch betätigten Kolben (10) ausgeübten Druck auf einen vorbestimmten Wert begrenzt.

3. Vorrichtung nach Anspruch 2, dadurch gekennzeichnet, dass der hydraulisch betätigte Kolben (10) einen Längskanal (26) aufweist, der durch das Überdruckventil (27) verschliessbar ist.

4. Vorrichtung nach Anspruch 3, dadurch gekennzeichnet, dass das Überdruckventil (27) als Kolbenventil ausgebildet ist, welches einen federbelasteten Verschlussteil (29) zum Verschliessen des Längskanals (26) aufweist.

5. Vorrichtung nach einem der vorhergehenden Ansprüche, dadurch gekennzeichnet, dass der bewegliche Kolben (10) mit einer mechanischen Antriebsvorrichtung gekoppelt ist, derart, dass ausgelaugtes Getränkepulver (50) durch den beweglichen Kolben (10) aus der Brühkammer (1) ausgestossen wird und dass danach der bewegliche Kolben (10) nach unten gegen den Boden (3) der Brühkammer (1) gezogen wird.

6. Vorrichtung nach Anspruch 5, dadurch gekennzeichnet, dass der bewegliche Kolben (10) von der mechanischen Antriebsvorrichtung abkoppelbar ist resp. einen Leerlauf aufweist, derart, dass der bewegliche Kolben (10) im von der mechanischen Antriebsvorrichtung abgekoppelten Zustand hydraulisch betätigbar ist.

7. Vorrichtung nach einem der vorhergehenden Ansprüche, dadurch gekennzeichnet, dass der bewegliche Kolben (10) derart ausgebildet ist, dass beim Rückzug desselben in die Ausgangslage zwischen der Rückseite (15) des beweglichen Kolbens (10) und dem Boden (3) der Brühkammer (1) verbleibendes Restwasser verdrängt wird.

8. Vorrichtung nach einem der vorhergehenden Ansprüche, dadurch gekennzeichnet, dass an den von der Kolbenrückseite (15) begrenzten Teil der Brühkammer (1) eine gemeinsame Leitung (20) für die Wasserzu- und -abfuhr angeschlossen ist, und dass ein separates Zweiwegventil (19) vorgesehen ist, welches eine gemeinsame Leitung (20) wechselweise mit einer Zuleitung (17) sowie einer Ableitung (48) verbindet.
